(19) Europäisches Patentamt
European Patent Office
Office européen des brevets

(11) **EP 1 487 636 B1**

(12) **EUROPÄISCHE PATENTSCHRIFT**

(45) Veröffentlichungstag und Bekanntmachung des Hinweises auf die Patenterteilung:
**06.08.2008 Patentblatt 2008/32**

(51) Int Cl.:
***B32B 3/30*** *(2006.01)*   ***B32B 37/00*** *(2006.01)*

(21) Anmeldenummer: **03722366.6**

(86) Internationale Anmeldenummer:
**PCT/EP2003/003289**

(22) Anmeldetag: **28.03.2003**

(87) Internationale Veröffentlichungsnummer:
**WO 2003/082563 (09.10.2003 Gazette 2003/41)**

(54) **MEHRSCHICHTIGE KUNSTSTOFFBAHN ODER -PLATTE MIT DREIDIMENSIONALER OPTIK, VERFAHREN ZUR HERSTELLUNG UND VERWENDUNG DAVON**

MULTI-LAYERED PLASTIC STRIP OR PLATE HAVING A THREE-DIMENSIONAL OPTICAL ASPECT, METHOD FOR THE PRODUCTION AND USE THEREOF

BANDE OU PLAQUE DE MATIERE PLASTIQUE MULTICOUCHE A ASPECT EN RELIEF, PROCEDE DE PRODUCTION ET UTILISATION DE CETTE BANDE OU PLAQUE

(84) Benannte Vertragsstaaten:
**AT BE BG CH CY CZ DE DK EE ES FI FR GB GR HU IE IT LI LU MC NL PT RO SE SI SK TR**

(30) Priorität: **28.03.2002 DE 10214100**

(43) Veröffentlichungstag der Anmeldung:
**22.12.2004 Patentblatt 2004/52**

(73) Patentinhaber: **Armstrong DLW AG**
**74321 Bietigheim-Bissingen (DE)**

(72) Erfinder:
• **SCHWONKE, Karl-Heinz**
**74369 Löchgau (DE)**

• **REICHWEIN, David, P.**
**Elizabethtown, PA 17022 (US)**

(74) Vertreter: **Müller-Boré & Partner**
**Patentanwälte**
**Grafinger Strasse 2**
**81671 München (DE)**

(56) Entgegenhaltungen:
**WO-A-02/099182       US-A- 4 312 686**
**US-A- 5 405 675**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine mehrschichtige Kunststoffbahn oder -platte mit dreidimensionaler Optik. Ferner betrifft die Erfindung ein Verfahren zur Herstellung der Kunststoffbahn oder -platte sowie die Verwendung davon.

Unter mehrschichtigen Kunststoffbahnen oder -platten im Sinne der vorliegenden Erfindung werden Flächengebilde verstanden, die aus mindestens zwei Schichten bestehen, die miteinander verbunden sind. Derartige Kunststoffbahnen oder - platten können als Wand- oder Deckenverkleidung, Dekorfolie oder künstliches Furnier und insbesondere als Bodenbelag verwendet werden.

Mehrschichtige Kunststoffbahnen auf Polyvinylchlorid(PVC)-Basis mit einer transparenten Deckschicht als Nutzschicht finden seit Jahrzehnten Anwendung als Bodenbeläge. Es werden jedoch auch andere Kunststoffe bzw. Polymere, wie beispielsweise Ethylen-Vinylacetat(EVA)-Copolymere, Kunststoffe auf Basis von olefinischen Polymeren, wie Polyethylen(PE), Polypropylen(PP), Ethylen-Propylen-Copolymere sowie Copolymere des Ethylen mit anderen olefinischen ungesättigten Verbindungen zur Herstellung von Bodenbelägen eingesetzt. Eine mehrschichtige Kunststoffbahn oder -platte, die als Bodenbelag verwendet wird, besteht aus mindestens zwei Schichten, einer transparenten Deckschicht bzw. Nutzschicht (auch Klarschicht oder Klarfolie genannt) und einer Unterschicht (auch Unterfolie genannt). Oftmals ist zwischen der Deckschicht und Unterschicht eine weitere Schicht (welche als Printfolie, Weißfolie, Druckfolie, Druckträger oder bedruckte Weißfolie bezeichnet wird) angeordnet.

Zur Darstellung einer Musterung kann die transparente Deckschicht (Klarschicht) auf ihrer Unterseite, d.h. auf der der Unterschicht zugewandten Oberfläche ein- oder mehrfarbig bedruckt werden. Zusätzlich oder anstatt kann die Unterschicht auf ihrer der Deckschicht zugewandten Oberfläche ein- oder mehrfarbig bedruckt werden. Dabei werden zur Bedruckung bzw. Bemusterung vorzugsweise bis zu 16 verschiedene Farben verwendet, mehr bevorzugt bis zu 8 Farben.

Sofern eine weitere, nicht transparente Schicht (Weißfolie) zwischen der Deckschicht und der Unterschicht angeordnet wird, erfolgt die Bemusterung auf der der Deckschicht zugewandten Oberfläche der weiteren Schicht, entweder zusätzlich oder anstelle des Musters auf der Unterseite der transparenten Deckschicht, da in diesem Fall die Unterschicht nicht sichtbar ist.

Jede der vorgenannten Schichten, insbesondere die Deckschicht und die Unterschicht kann ein- oder mehrschichtig ausgebildet sein. Aus produktionstechnischen Gründen und hinsichtlich der Kosten ist es oftmals vorteilhafter, zwei oder mehr dünne Folien, zum Beispiel transparente Folien miteinander zu verbinden (beispielsweise durch Laminieren), um eine entsprechend dicke Deckschicht zu erhalten, als die Schicht in ihrer gewünschten Dicke in einem Arbeitsgang herzustellen.

Die einzelnen Schichten können aus dem gleichen Grundmaterial hergestellt sein, jedoch ist dies nicht zwingend, sofern sich die Schichten nur miteinander kraftschlüssig verbinden lassen. Da nur die Deckschicht transparent sein muss, ist man in der Wahl der Kunststoffe bzw. Kunststoffgemische und der Zusatzstoffe in der weiteren Schicht (Weißfolie) und insbesondere der Unterschicht relativ frei. Aus praktischen Gründen wird die Unterschicht aus bis zu 80 Gew.-% Recyclingmaterial (auch Recyclat oder Scrap genannt) hergestellt. Dieses Recyclingmaterial ist beispielsweise zerkleinertes Material bereits gebrauchter Beläge, aber auch Abfallmaterial aus der Produktion neuer Beläge, wie zum Beispiel Randabschnitte und Ähnliches.

Mehrschichtige Kunststoffbahnen oder -platten auf PVC-Basis zur Verwendung als Bodenbelag werden üblicherweise aus folgenden Schichten aufgebaut:

- Transparente Deckschicht (Klarschicht); Dicke zwischen etwa 0,05 mm und etwa 4 mm, vorzugsweise zwischen etwa 0,1 und etwa 2 mm. Die Klarschicht kann aus 1 bis 8 Einzelfolien laminiert sein, wobei 1 bis 4 Einzelfolien bevorzugt sind.
- Weißfolie (Printfolie), gegebenenfalls gefärbt und/oder bedruckt; Dicke zwischen etwa 0,05 mm und etwa 0,3 mm, vorzugsweise zwischen 0,1 und 0,2 mm.
- Unterschicht (Unterfolie) in beliebiger Farbe; Dicke zwischen etwa 0,05 mm und etwa 4 mm, vorzugsweise zwischen etwa 0,3 und 2 mm. Die Unterschicht kann aus 1 bis 6 Einzelfolien laminiert sein, wobei 1 bis 3 Einzelfolien bevorzugt sind.

Die Gesamtdicke der mehrschichtigen Kunststoffbahnen oder -platten beträgt zwischen etwa 0,7 und etwa 10 mm, wobei eine Gesamtdicke zwischen etwa 1 mm und etwa 5 mm bevorzugt ist.

Typischerweise wird die Deckschicht aus einem Laminat zweier transparenter Folien mit einer Dicke von jeweils etwa 5 mm gebildet. Die Dicke einer Zwischenschicht (Weißfolie) beträgt im allgemeinen etwa 0,10 bis 0,12 mm und die Unterschicht wird, wie die Deckschicht, häufig aus einem Laminat aus mindestens zwei Folien gebildet, wobei jede der beiden Folien etwa 0,7 mm bis 0,8 mm dick ist.

Neben den genannten Schichten können je nach Bedarf auch weitere Schichten vorhanden sein. Beispielsweise kann zwischen der Weißfolie und der Unterschicht oder als letzte Schicht unter der Unterschicht eine Schicht zur Trittschalldämmung oder zur Wärmeisolation angeordnet sein. Ferner kann als unterste Schicht eine Haft- bzw. Klebeschicht angeordnet sein, so daß die mehrschichtigen Kunststoffbahnen oder -platten selbstklebend sind. Dies ist insbesondere bei Bodenbelägen vorteilhaft.

Bei Verwendung der erfindungsgemäßen Kunststoffbahnen oder -platten als Bodenbelag ist es bevorzugt, daß auf die Oberfläche der Nutzschicht, das heißt auf die Klarschicht, ein Finish zum Schutz und zur leichteren Pflege bzw. Reinigung des Bodenbelags aufgebracht wird. Zu diesem Zweck können übliche, reinigende und pflegende Substanzen aufgebracht werden, welche die optischen Eigenschaften bewahren bzw. wiederherstellen. Dabei handelt es sich im Normalfall um stark polymerhaltige Wachsdispersionen, die einen etwa 5 μm bis etwa 10 μm dicken Film bilden, der für die Zeit seines Vorhandenseins als eine Schutzschicht wirkt. Alternativ können die Bodenbeläge, insbesondere PVC-Bodenbeläge mit Lacken auf Polyurethan-Basis (sog. PU-Versiegelungen) versiegelt werden. Derartige PU-Versiegelungen, die wasserbasierend oder auch lösemittelfrei, z.B. UV-härtend, sein können, weisen normalerweise Schichtdicken im Bereich von etwa 5 μm bis etwa 50 μm auf.

Die einzelnen Folien werden herkömmlicherweise in einer automatischen Laminiermaschine (auch AUMA genannt) unter Anwendung von Druck (typischerweise etwa 8-30 N/cm$^2$) und Temperatur (typischerweise etwa 170 bis 195°C) während eines Zeitraums von etwa 1 bis 1,5 Minuten kraftschlüssig miteinander verbunden. Um die glatte Oberfläche des Belags gegen Verkratzen unempfindlicher zu machen und um die Optik des Druckmusters zu verstärken, erfolgt nach dem Laminieren der Schichten oftmals eine oberflächliche Prägung. Eine dreidimensionale Optik, d.h. der optische Eindruck, der Bodenbelag habe trotz einer ebenen Ausgestaltung eine dreidimensionale Struktur, kann damit nicht erzielt werden.

Es ist daher eine Aufgabe der vorliegenden Erfindung, eine mehrschichtige Kunststoffbahn oder -platte mit einer dreidimensionalen Optik bereitzustellen. Eine weitere Aufgabe der vorliegenden Erfindung ist es, ein Verfahren anzugeben, mit dem eine mehrschichtige Kunststoffbahn oder -platte mit dreidimensionaler Optik auf einfache und kostengünstige Weise hergestellt werden kann, wobei die herkömmlichen Maschinen zur Herstellung derartiger Bahnen ohne großen apparativen Mehraufwand zum Einsatz gebracht werden können.

Diese Aufgaben werden durch die in den Ansprüchen definierten Gegenstände gelöst, wobei vorteilhafte Weiterbildungen der Erfindung in den Unteransprüchen gekennzeichnet sind.

Die Erfindung beruht dabei auf der Erkenntnis, dass eine mehrschichtige Kunststoffbahn oder -platte mit einer ausgeprägten dreidimensionalen Optik dadurch hergestellt werden kann, dass man die Unterfolie vor dem Laminieren an ihrer Oberfläche einseitig mit einer Prägung versieht und dann die Deckschicht und gegebenenfalls die weitere Schicht (Weißfolie) unter einer bestimmten Temperaturführung, die von den Erweichungspunkten der jeweiligen Schichten abhängt, kraftschlüssig miteinander verbindet.

Erfindungsgemäß ist es möglich, die Prägestruktur der Unterfolie nahezu authentisch in die Unterseite der Deckschicht bzw. bei Vorhandensein der weiteren Schicht durch diese weitere Schicht hindurch in die Unterseite der Deckschicht zu übertragen.

Zur Herstellung der erfindungsgemäßen Kunststoffbahnen oder -platten können die üblicherweise für die Herstellung von Bodenbelägen eingesetzten Apparaturen und Maschinen verwendet werden, wobei im wesentlichen nur die einseitige Prägung der Unterschicht auf ihrer, der Deckschicht zugewandten Oberfläche hinzukommt und die Temperaturführung beim Laminieren entsprechend gesteuert werden muss.

Auf die erfindungsgemäße Weise ist es möglich, auf einfache Weise auch scharfkantige Strukturen in die Unterseite der Deckschicht zu übertragen, wodurch eine deutlich ausgeprägte dreidimensionale Optik darstellbar ist. Erfindungsgemäß können auf der Oberseite der Unterschicht Prägungen mit Prägetiefen erreicht werden, die von etwa 0,01 mm bis zu annähernd der Dicke der Unterschicht reichen. Bei einer Dicke der Unterschicht von beispielsweise 4 mm ist es ohne weiteres möglich, konturenscharfe Prägungen mit einer Prägetiefe von etwa 3,5 mm zu realisieren. Durch eine auf die Oberseite des fertigen Laminats, d.h. die Nutzfläche im Falle eines Bodenbelags, aufgebrachte ruhige Prägung, kann die dreidimensionale Optik der Bahn noch verstärkt und der Bahn ein edler Charakter verliehen werden.

Der Schichtenaufbau der erfindungsgemäßen Kunststoffbahnen oder -platten erfolgt in an sich bekannter Weise wie vorstehend beschrieben. Auch die Farb- bzw. Mustergebung wird in der herkömmlichen Weise durchgeführt, d.h. die transparente Deckschicht kann hinterdruckt werden und zusätzlich oder anstelle davon kann die Oberseite der geprägten Unterschicht oder, sofern vorhanden, die Oberseite der weiteren Schicht (Weißfolie) bedruckt werden.

Es ist erfindungsgemäß bevorzugt, dass die Schichten aus vorgefertigten Folien bestehen, wobei die Schichten, insbesondere die dickeren Schichten, wie die Deckschicht und die Unterschicht Laminate aus zwei oder mehr dünneren Folien sein können.

Die erfindungsgemäße Kunststoffbahn oder -platte weist vorzugsweise auf ihrer obersten Oberfläche (Nutzschicht bei einem Bodenbelag) eine zusätzliche Prägung auf, die entweder eine unregelmäßige Prägung, zum Beispiel eine feine Prägung zur Mattierung der Oberfläche ist, oder aber eine Prägung, die mit der Oberflächenprägung der Unterschicht kommuniziert, wodurch sich die dreidimensionale Optik der Kunststoffbahn verstärken oder modifizieren lässt.

Vorteilhafterweise handelt es sich bei der zusätzlichen Prägung auf der obersten Oberfläche um eine gleichmäßige Prägung bzw. eine Prägung mit einem regelmäßigen Muster von Erhebungen und Vertiefungen, da durch eine derartige Prägung das Anschmutzverhalten von z.B. einem Bodenbelag deutlich verbessert werden kann. Dieser Effekt ist auch als "Lotuseffekt" bekannt geworden. Es hat sich erwiesen, daß der Effekt der zusätzlichen Oberflächenstrukturierung am ausgeprägtesten ist, wenn der durchschnittliche Abstand zwischen Profilspitzen in der Mittellinie, entsprechend dem sogenannten Sm-Wert oder Rillenabstand Sm gemäß DIN 4768, in einem Bereich von größer als 200 $\mu$m und kleiner als 1000 $\mu$m liegt.

Hinsichtlich der Höhe der Erhebungen (gemittelte Rauhtiefe $R_z$ gemäß DIN 4768) des geprägten Materials hat sich ein Wert im Bereich von 20 $\mu$m bis 200 $\mu$m als vorteilhaft erwiesen. Die Prägung kann beispielsweise mit einer Prägewalze erreicht werden.

Das Material für die Matrix der einzelnen Schichten bzw. Folien der erfindungsgemäßen Kunststoffbahnen oder -platten unterliegt keiner besonderen Beschränkung und kann beispielsweise ausgewählt sein aus Polyvinylchlorid (PVC), Etylen-Vinylacetat-Copolymer(EVA), Homo- und Copolymeren von ethylenisch ungesättigten Verbindungen, Ethylen-Alkylacrylat-Copolymeren, Ethylen-Propylen-Dien-Mischpolymeren(EPDM), Dien-enthaltenden Copolymeren, wie Styrol-Butadien-Styrol(SBS)-Blockcopolymeren und Styrol-Isopren-Styrol(SIS)-Blockcopolymeren und dergleichen.

Wegen seiner hervorragenden Gebrauchseigenschaften, insbesondere bei Verwendung als Bodenbelag ist ein Material auf PVC-Basis bevorzugt.

Je nach Art der Schicht können die Schichten Weichmacher und übliche Zusätze, wie Füllstoffe, Färbemittel, wie Pigmente und organische und anorganische Farbstoffe, und Hilfsstoffe enthalten.

Als Beispiele für Füllstoffe seien Kreide, Bariumsulfat, Schiefermehl, Kieselsäure, Kaolin, Quarzmehl, Talkum, Lignin, Zellulose, Glaspulver, Textil- oder Glasfasern, Zellulosefasern und Polyesterfasern genannt, die in einer Menge von etwa 20 bis 80 Gew.-%, bezogen auf das Gesamtgewicht der betreffenden Schicht, eingesetzt werden können. Zu den Hilfsstoffen sind beispielsweise Antioxidantien, Antistatika, Stabilisatoren, UV-Absorber, Treibmittel, Fungizide, Gleitmittel und Bearbeitungshilfsmittel in den üblichen Mengen zu zählen.

Für die Herstellung der erfindungsgemäßen Kunststoffbahnen oder -platten mit dreidimensionaler Optik auf Basis von PVC werden die einzelnen Folien für die transparente Deckschicht, die Weißfolie und die Unterschicht aus den folgenden Ausgangsmaterialien in den angegebenen Mengen hergestellt:

Als PVC ist ein durch übliche Polymerisationsverfahren, wie Suspensionspolymerisation (S-PVC), Emulsionspolymerisation (E-PVC) und Substanz- bzw. Massepolymerisation (M-PVC) erhältliches PVC mit Molmassen von ca. 30.000 bis ca. 130.000 g/mol, was K-Werten von etwa 45 bis etwa 80 entspricht, verwendbar. Bevorzugt sind K-Werte von etwa 60 bis etwa 70 und mehr bevorzugt von etwa 65. Es können auch Gemische von verschiedenen PVC-Typen eingesetzt werden. Für die Unterschicht kann zudem Scrap-Material, d.h. Recyclingmaterial, eingesetzt werden, da es hier auf Transparenz und Farbe nicht ankommt.

Als Weichmacher können grundsätzlich alle üblichen Weichmacher verwendet werden, wie beispielsweise Phthalsäureester, Trimellitsäureester, Phosphorsäureester, Benzoesäureester, Polymer-Weichmacher, wie Polyester aus Adipin-, Sebacin-, Azelain- und Phthalsäure mit Diolen etc.

Erfindungsgemäß bevorzugt sind Ester der Phthalsäure, wie Dioctylphthalat (DOP), Bis(2-Ethylhexyl)-Phthalat, Diisononylphthalat (DINP), Diisododecylphthalat (DIDP), Dibutylphthalat (DBP), Diethylphthalat (DEP), Benzylbutylphthalat (BBP), Butyloctylphthalat, Dipentylphthalat und dergleichen.

Typische Zusammensetzungen für die einzelnen Folien sind wie folgt:

Transparente Deckschicht

| Ausgangsmaterial | Mengenbereich (Gew.-%) | Bevorzugter Mengenbereich (Gew.-%) |
|---|---|---|
| PVC | 60-95 | 65-80 |
| Weichmacher | 5-35 | 10-30 |
| Stabilisator | 0,1-8 | 0,5-5 |
| Antistatika | 0,1-4 | 0,2-2 |

Weißfolie (Printfolie)

| Ausgangsmaterial | Mengenbereich (Gew.-%) | Bevorzugter Mengenbereich (Gew.-%) |
|---|---|---|
| PVC | 60-95 | 65-80 |
| Weichmacher | 5-35 | 10-30 |
| Stabilisator | 0,1-8 | 0,5-5 |
| Antistatika | 0,1-4 | 0,2-2 |
| Pigment | 2-12 | 3-7 |

Unterschicht

| Ausgangsmaterial | Mengenbereich (Gew.-%) | Bevorzugter Mengenbereich (Gew.-%) |
|---|---|---|
| PVC-Scrap | 10-80 | 30-70 |
| PVC-Neumaterial | 10-80 | 5-50 |
| Weichmacher | 0-50 | 1,5-40 |
| Stabilisator | 0-5 | 0-3 |
| Antistatika | 0-4 | 0-2 |
| Gleitmittel | 0-2 | 0,2-0,7 |
| Füllstoff | 0-80 | 0-50 |
| Pigment | 0-2 | 0,2-1 |

Zur Erzielung einer möglichst ausgeprägten, d.h. scharfkantigen und mit klaren Linien und Grenzen versehenen dreidimensionalen Optik gemäß der Erfindung ist es von entscheidender Bedeutung, die Materialien für die einzelnen Schichten hinsichtlich ihres Erweichungspunkts auszuwählen und/oder eine bestimmte Temperaturführung bei der kraftschlüssigen Verbindung der einzelnen Schichten bzw. Folien zu beachten.

Es hat sich erwiesen, dass sich der erfindungsgemäße Effekt, nämlich eine hervorragende dreidimensionale Optik der Kunststoffbahn dann erreichen lässt, wenn die transparente Deckschicht und die gegebenenfalls vorhandene weitere Schicht beim Verbinden mit der Unterschicht bereits deutlich weicher sind, als die an der Oberseite einseitig geprägte Unterschicht. Im günstigsten Fall ist die Unterschicht beim Zusammenpressen mit den anderen Schichten hart, während die Deckschicht und die gegebenenfalls vorhandene weitere Schicht sich bereits deutlich ihrem Erweichungspunkt genähert oder diesen bereits überschritten haben. Unter diesen Voraussetzungen wird die Prägung der Oberfläche der Unterschicht praktisch unverändert auf bzw. in die Unterseite der Deckschicht, gegebenenfalls durch die weitere Schicht hindurch, übertragen. Wegen der geringen Dicke der weiteren Schicht ist deren Erweichungspunkt weniger kritisch, als der der wesentlich dickeren transparenten Deckschicht.

Aus den besagten Gründen ist es vorteilhaft, dass die transparente Deckschicht und die gegebenenfalls zwischen der Deckschicht und der Unterschicht angeordnete weitere Schicht jeweils einen niedrigeren Erweichungspunkt aufweisen, als die Unterschicht. Vorzugsweise ist der Erweichungspunkt der Deckschicht und der Zwischenschicht um mindestens 10°C, mehr bevorzugt um mindestens 15°C und am meisten bevorzugt um mindestens 20°C niedriger als der der Unterschicht.

Als Maß für die zur Oberflächenprägung der Unterschicht geeignete Härte kann der sogenannte Eindruckindex der Unterschicht herangezogen werden, der folgendermaßen bestimmt wird.

Zunächst wird die Dicke der gefertigten Unterschicht gemessen. Hierauf wird die Unterschicht an einer Stelle mit einem Stahlstift von 4,6 mm Durchmesser unter einem Druck von 55 kg während 60 Sekunden bei 23°C und 50 % relativer Luftfeuchtigkeit belastet. Nach Entlastung wird die Dicke der Unterschicht an dieser Stelle gemessen und aus den gemessenen Daten der Eindruckindex nach folgender Gleichung berechnet:

$$\text{Eindruckindex} = \text{Eindrucktiefe (mm)} / \text{ursprüngliche Schichtdicke (mm)} \times 100\ \%$$

**EP 1 487 636 B1**

Im Rahmen der Erfindung weist eine geeignete Unterschicht einen Eindruckindex von 20-80 % und vorzugsweise von 25-60 % auf.

Zur Erzielung des erfindungsgemäßen Effektes ist es allerdings auch möglich, für die einzelnen Schichten bzw. Folien Materialien zu verwenden, deren Erweichungspunkte nicht oder nur geringfügig differieren. In diesem Fall ist die Temperaturführung beim kraftschlüssigen Verbinden durch zum Beispiel Laminieren so zu gestalten, dass die Temperatur auf der Seite der Deckschicht höher ist, als auf der Seite der Unterschicht, so dass die Temperaturdurchdringung von der Deckschicht zur Unterschicht hin erfolgt und somit ein Temperaturgradient auftritt. Bei Verwendung einer AUMA zum Laminieren der Schichten kann diese Temperaturführung auf einfache Weise dadurch erreicht werden, dass die mit der Deckschicht in Kontakt stehende Trommel bzw. Walze geheizt wird. Wenn notwendig, kann die Unterschicht zusätzlich gekühlt werden.

Bei ungünstigen Verhältnissen der Erweichungspunkte der einzelnen Schichten, zum Beispiel in dem Fall, dass die Deckschicht einen höheren Erweichungspunkt aufweist, als die Unterschicht, kann die Deckschicht vor der Zuführung zur Laminiermaschine vorgewärmt werden, um sie entsprechend weich zu machen. Alle anderen Verfahrensparameter können gegenüber dem Standardverfahren unter Verwendung einer AUMA beibehalten werden.

Die Verwendung einer AUMA zur Laminierung der einzelnen Folien besitzt den vorteilhaften Effekt, daß sich die Gewebestruktur des Mitläuferbandes, welches zwischen dem Druckband und der Unterschicht mitgeführt wird, auf die Unterseite der Unterfolie überträgt. Dieser Gewebeabdruck erhöht die Haftung des Bodenbelags, wenn er mit Haftklebstoffen mit dem Untergrund verbunden wird, da die Klebemasse in die Vertiefungen eindringen kann und dadurch die mit Klebstoff in Kontakt stehende Oberfläche vergrößert wird.

Die erfindungsgemäßen mehrschichtigen Kunststoffbahnen oder -platten können auf folgende Weise hergestellt werden:

Zunächst wird in an sich bekannter Weise eine Schicht bzw. eine Folie bzw. ein Laminat aus zwei oder mehr Folien aus einem thermoplastischen Kunststoffmaterial bereitgestellt und die vorgefertigte Schicht wird einseitig auf einer Oberfläche geprägt, um eine oberflächengeprägte Unterschicht zu erhalten. Die Prägung kann beträchtlich vor dem Verbinden mit den anderen Schichten der Kunststoffbahn in einem separaten Arbeitsschritt erfolgen, aber auch unmittelbar vor dem Laminieren, sozusagen "on-line" vor der kraftschlüssigen Verbindung der Schichten.

Ferner wird ebenfalls in an sich bekannter Weise eine transparente Deckschicht in Form einer Folie oder einem Laminat aus zwei oder mehr Folien aus einem thermoplastischen Kunststoffmaterial bereitgestellt.

Die Deckschicht wird sodann über der Unterschicht in der Weise angeordnet, dass sie der geprägten Oberfläche der Unterschicht gegenüberliegt bzw. die beiden Schichten werden in dieser Anordnung einer Apparatur zum kraftschlüssigen Verbinden, zum Beispiel einer AUMA zugeführt.

Sofern eine weitere Schicht (Weißfolie) vorgesehen ist, wird diese zwischen der transparenten Deckschicht und der geprägten Unterschicht angeordnet bzw. zwischen der Deckschicht und der Unterschicht der Apparatur zum Verbinden der Schichten zugeführt.

Die Verarbeitungsbedingungen bei der Herstellung der Folien (Klarfolie, Printfolie Unterfolie) sind abhängig von der jeweiligen Schichtdicke, dem zu verarbeitenden Material etc. und sind insbesondere im Falle der Herstellung von Folien auf PVC-Basis wie folgt:

Massetemperaturen des zu kalandrierenden Gemischs aus z.B. Kunststoff, gegebenenfalls Füllstoffen, Additiven, Verarbeitungshilfsmitteln, gegebenenfalls Pigmenten und/oder Farbstoffen etc.: 140 bis 220°C; vorzugsweise 160-195°C.

Kalandertemperatur: 140-230°C; vorzugsweise 160-195°C.

Kalandergeschwindigkeit: 0,5-70 m/min; vorzugsweise 5-45 m/min.

Die oberflächliche Prägung der Unterfolie (insbesondere im Falle des PVC) erfolgt bei einer Temperatur der Folie von 70-160°C, vorzugsweise 100-150°C, wobei die Temperatur der Prägewalze zwischen -15 und 70°C, vorzugsweise zwischen 10 und 60°C liegt.

Anschließend werden die Schichten unter Anwendung von Druck und Temperatur kraftschlüssig miteinander verbunden. Dabei wird die Temperatur nur von der Seite der Deckschicht her beaufschlagt, wobei die Seite der Unterschicht nicht erwärmt oder sogar gekühlt wird.

Im Falle der Verwendung einer AUMA zum kraftschlüssigen Verbinden der einzelnen Folien weist die mit der Klarschicht in Kontakt tretende Walze eine Temperatur von 160-230°C, vorzugsweise 170-195°C auf, und die Geschwindigkeit, mit der das Laminat durch die AUMA transportiert wird, liegt im Bereich von 0,1 bis 10 m/min., vorzugsweise im Bereich von 1-5 m/min.

Eine weitere bevorzugte Herstellung der erfindungsgemäßen Kunststoffbahnen oder -platten erfolgt in der Weise, dass die kraftschlüssige Laminierung der einzelnen Folien bzw. vorlaminierten Folien unter Verwendung einer Apparatur erfolgt, die zwei Walzen aufweist, zwischen denen die Folien unter Druck hindurchgeführt werden. Dies hat den Vorteil, dass einerseits die mit der transparenten Deckschicht in Kontakt stehende Walze geheizt werden kann und andererseits auf einfache Weise auch die mit der Unterschicht in Kontakt stehende Walze, wenn nötig, gekühlt werden kann.

Vorteilhafterweise wird das Laminat anschließend bei Temperaturen von etwa 30 bis etwa 180°C, vorzugsweise etwa 70 bis etwa 120°C getempert. Diese Temperbehandlung wird in der Regel von einer Materialschrumpfung begleitet, die im Falle von z.B. PVC bei einer Temperung von 80°C während 6 Stunden etwa 0,05 bis 0,3 % beträgt.

Nach dem kraftschlüssigen Verbinden der Schichten liegt die erfindungsgemäße mehrschichtige Kunststoffbahn oder -platte mit einer konturenscharfen, ausgeprägten dreidimensionalen Optik vor. Bei Verwendung als Bodenbelag kann die Kunststoffbahn oder -platte so wie erhalten eingesetzt werden; sie kann jedoch auch in kleinere Stücke, insbesondere Fliesen, geschnitten bzw. gestanzt werden.

Wie vorstehend erwähnt, kann die der Unterschicht zugewandte Oberfläche der transparenten Deckschicht bereits bei deren Herstellung bedruckt werden oder kurz bevor sie der Laminiermaschine zugeführt wird. Zusätzlich oder statt dessen kann entweder die der Deckschicht zugewandte Oberfläche der Zwischenschicht (Weißfolie) oder die geprägte Oberfläche der Unterschicht bereits bedruckt sein oder kurz vor dem Verbinden mit der transparenten Deckschicht bedruckt werden.

Auf die vorgenannte Weise ist es möglich, eine mehrschichtige Kunststoffbahn oder -platte mit dreidimensionaler Optik herzustellen, wobei sich die Oberflächenprägung der Unterschicht überraschenderweise praktisch ohne Konturenverlust bei äußerst einfacher Verfahrensführung auf die transparente Deckschicht überträgt.

Mit dem erfindungsgemäßen Verfahren lassen sich überdies vorteilhafte Musterungseffekte erzielen.

Gemäß einer Ausführungsform wird eine mehrschichtige Kunststoffbahn oder -platte aus einer transparenten Deckschicht, einer bedruckten Weißfolie und einer oberflächengeprägten Unterschicht durch Laminieren hergestellt, wobei die Profilspitzen der Prägung der Unterschicht vor dem Laminieren unter Verwendung von beispielsweise einer Moosgummiwalze mit einem Lösungsmittel benetzt werden. Dies führt dazu, dass die bedruckte Weißfolie bei Kontakt mit den mit Lösungsmittel benetzten Profilspitzen weggelöst wird, so dass die darunterliegende, meist dunkel gefärbte (zum Beispiel braun, grau oder schwarz) Unterschicht sichtbar wird. Damit lassen sich Punktemuster, Sternmuster und dergleichen erzeugen. Bei entsprechender Prägung der Unterschicht mit linienförmigen Erhebungen können jedoch auch Fliesenfugen bei einem bahnenförmigen Produkt vorgetäuscht werden.

Der selbe Effekt lässt sich in einer weiteren Ausführungsform auf folgende Weise erzeugen. Es wird eine Kunststoffbahn oder -platte aus einer transparenten Deckschicht und einer auf ihrer Oberfläche geprägten und farbig bedruckten Unterschicht gebildet, wobei die Profilspitzen der Erhebungen der bedruckten Unterschicht vor dem Verbinden mit der transparenten Deckschicht mit geeigneten Hilfsmitteln, zum Beispiel einem Schleifpapier abgeschliffen werden, so dass auch hier die dunkel gefärbte Unterschicht an den abgeschliffenen Stellen durch die transparente Deckschicht der fertigen Kunststoffbahn oder -platte sichtbar wird.

In allen Ausführungsformen der Erfindung kann die Oberfläche der fertigen Kunststoffbahn oder -platte mit einem zusätzlichen Prägemuster versehen sein, um die Optik zu verstärken oder zu modifizieren und um beispielsweise die Oberfläche zu mattieren.

Mit der vorliegenden Erfindung können auf einfache und kostengünstige Weise mehrschichtige Kunststoffbahnen oder -platten mit einer ausgeprägten, gewünschtenfalls konturenscharfen, dreidimensionalen Optik bereitgestellt werden, die als Wand- oder Deckenverkleidung, Dekorfolie, künstliches Furnier und insbesondere als Bodenbelag verwendet werden können.

Die Erfindung wird anhand des nachfolgenden Beispiels näher erläutert.

**BEISPIEL**

Herstellung einer Unterfolie

Die in der nachfolgenden Tabelle angegebenen Substanzen werden in einer Mischapparatur plastifiziert und homogen miteinander vermischt.

| Ausgangsmaterial | Anteil (Gew.-%) |
| --- | --- |
| PVC-Scrap | 50,0 |
| S-PVC (K-Wert: 65) | 12,0 |
| DINP (Weichmacher, Diisononylphthalat) | 4,0 |
| DOP (Weichmacher, Dioctylphthalat) | 4,0 |
| Epoxidiertes Sojaöl (Stabilisator) | 2,0 |
| Antistatikum | 0,2 |
| Barium Zink Stabilisator | 0,2 |

(fortgesetzt)

| Ausgangsmaterial | Anteil (Gew.-%) |
|---|---|
| Zinkstearat (Gleitmittel; Stabilisator) | 0,4 |
| Kreide (Füllstoff) | 26,6 |
| Rußpigment | 0,6 |

Die homogene Mischung wird mit Hilfe eines Kalanders zu einer 2 mm dicken Folie geformt, wobei die Massetemperatur der Mischung auf 178°C und die Kalandertemperatur auf 190°C eingestellt werden. Die Vortriebsgeschwindigkeit im Kalander beträgt 28 m/min.

Anschließend wird die so erhaltene PVC-Folie auf 132°C abgekühlt und mit Hilfe einer Prägewalze mit einer Temperatur von 48,5°C mit einem Prägemuster versehen. Das Muster hat das Aussehen von vierseitigen Pyramiden mit einer Basiskantenlänge von 3 mm und einer Prägetiefe von 1,1 mm (Höhendifferenz zwischen Pyramidengrundfläche und Pyramidenspitze). Das Prägemuster weist scharfe Kanten und Linien auf.

Die Unterschicht weist einen Eindruckindex von 34 % auf, der wie vorstehend gemessen wurde.

Herstellung einer Printfolie

Die in der nachfolgenden Tabelle angegebenen Substanzen werden in einer Mischapparatur plastifiziert und homogen miteinander vermischt.

| Ausgangsmaterial | Anteil (Gew.-%) |
|---|---|
| S-PVC (K-Wert: 65) | 67,4 |
| E-PVC (K-Wert: 65) | 2,0 |
| DINP | 4,2 |
| DOP | 15,0 |
| Epoxidiertes Sojaöl | 2,4 |
| BBP (Weichmacher; Benzylbutylphthalat) | 1,2 |
| Antistatikum | 0,3 |
| Titandioxid (Weißpigment) | 7,5 |

Die homogene Mischung wird mit Hilfe eines Kalanders zu einer 0,11 mm dicken Folie geformt, wobei die Massetemperatur der Mischung auf 185°C und die Kalandertemperatur auf 192°C eingestellt werden. Die Vortriebsgeschwindigkeit im Kalander beträgt 29 m/min.

Anschließend wird die erhaltene Folie mit einem vierfarbigen Muster einseitig bedruckt.

Herstellung einer Klarfolie

Die in der nachfolgenden Tabelle angegebenen Substanzen werden in einer Mischapparatur plastifiziert und homogen miteinander vermischt.

| Ausgangsmaterial | Anteil (Gew.-%) |
|---|---|
| S-PVC (K-Wert: 65) | 72,9 |
| E-PVC (K-Wert: 65) | 2,0 |
| DINP | 4,2 |
| DOP | 17,0 |
| Epoxidiertes Sojaöl | 2,4 |
| BBP (Benzylbutylphthalat) | 1,2 |

(fortgesetzt)

| Ausgangsmaterial | Anteil (Gew.-%) |
|---|---|
| Antistatikum | 0,3 |

Die homogene Mischung wird mit Hilfe eines Kalanders zu einer 0,6 mm dicken Folie geformt, wobei die Massetemperatur der Mischung auf 185°C und die Kalandertemperatur auf 192°C eingestellt werden. Die Vortriebsgeschwindigkeit im Kalander beträgt 29,5 m/min.

Herstellung einer Kunststoffbahn mit dreidimensionaler Optik

Zur Herstellung einer Kunststoffbahn werden die geprägte Unterfolie, die bedruckte Printfolie und zwei Klarfolien so übereinander angeordnet, dass die geprägte Oberfläche der Unterschicht mit der nicht bedruckten Oberfläche der Printfolie in Kontakt kommt und die bedruckte Oberfläche der Printfolie mit der ersten Klarfolie. Die zweite Klarfolie wird über der ersten Klarfolie angeordnet.

Die übereinander liegenden Folien werden einer AUMA zugeführt, deren Trommel eine Temperatur von 192°C aufweist. Dabei werden die Folien der AUMA in der Weise zugeführt, dass die geheizte Trommel mit der zweiten, d.h. äußeren Klarfolie in Kontakt tritt. Die Folien werden mit einer Geschwindigkeit von 4,2 m/min durch die AUMA hindurchgeführt, wobei die einzelnen Folien kraftschlüssig miteinander verbunden werden. Die Dicke des erhaltenen Laminats verringert sich durch den Verzug in Längsrichtung während des AUMA-Prozesses von den ursprünglichen 3,31 mm (Summe der Schichtdicken der Einzelfolien) auf 3,0 mm.

Nach dem Laminieren wird die erhaltene Kunststoffbahn einem Tempern bei 110°C unterzogen.

Die fertige Kunststoffbahn weist eine dreidimensionale Optik auf, wobei die Linien und Kanten des pyramidenförmigen Prägemusters der Unterfolie konturenscharf erhalten geblieben sind und klar und deutlich durch die Klarschicht hindurch erkennbar sind.

**Patentansprüche**

1. Bodenbelag aus einer mehrschichtigen Kunststoffbahn oder -platte mit dreidimensionaler Optik, umfassend eine einseitig oberflächengeprägte Unterschicht und eine auf der geprägten Oberfläche der Unterschicht angeordnete und kraftschlüssig damit verbundene transparente Deckschicht, welche in ihrer Unterseite die von der Unterschicht übertragene Prägestruktur aufweist.

2. Bodenbelag aus einer mehrschichtigen Kunststoffbahn oder -platte nach Anspruch 1, wobei die transparente Deckschicht auf der der Unterschicht zugewandten Oberfläche bedruckt ist.

3. Bodenbelag aus einer mehrschichtigen Kunststoffbahn oder -platte nach Anspruch 1 oder 2, wobei die geprägte Oberfläche der Unterschicht bedruckt ist.

4. Bodenbelag aus einer mehrschichtigen Kunststoffbahn oder -platte nach Anspruch 1 oder 2, wobei zwischen der transparenten Deckschicht und der geprägten Unterschicht eine weitere Schicht angeordnet ist.

5. Bodenbelag aus einer mehrschichtigen Kunststoffbahn oder -platte nach Anspruch 4, wobei die weitere Schicht auf ihrer, der Deckschicht zugewandten Oberfläche bedruckt ist.

6. Bodenbelag aus einer mehrschichtigen Kunststoffbahn oder -platte nach einem oder mehreren der Ansprüche 1 bis 5, wobei die Unterschicht eine Folie ist.

7. Bodenbelag aus einer mehrschichtigen Kunststoffbahn oder -platte nach Anspruch 5, wobei die Unterschicht ein Laminat aus mindestens zwei Folien ist.

8. Bodenbelag aus einer mehrschichtigen Kunststoffbahn oder -platte nach einem oder mehreren der Ansprüche 1 bis 7, wobei die transparente Deckschicht eine Folie ist.

9. Bodenbelag aus einer mehrschichtigen Kunststoffbahn oder -platte nach Anspruch 8, wobei die transparente Deckschicht ein Laminat aus mindestens zwei Folien ist.

10. Bodenbelag aus einer mehrschichtigen Kunststoffbahn oder -platte nach einem oder mehreren der Ansprüche 1 bis 9, wobei die transparente Deckschicht auf ihrer, der geprägten Unterschicht abgewandten Oberfläche eine Prägung aufweist.

11. Bodenbelag aus einer mehrschichtigen Kunststoffbahn oder- platte nach Anspruch 10, wobei die Prägung eine vorbestimmte Struktur aufweist.

12. Bodenbelag aus einer mehrschichtigen Kunststoffbahn oder- platte nach Anspruch 10 oder 11, wobei die vorbestimmte Struktur ein Profil mit Erhebungen und Vertiefungen ist, wobei der durchschnittliche Abstand zwischen Profilspitzen in der Mittellinie (Sm) mehr als 200 $\mu$m und weniger als 1000 $\mu$m beträgt.

13. Bodenbelag aus einer mehrschichtigen Kunststoffbahn oder- platte nach einem oder mehreren der Ansprüche 10 bis 12, wobei die Höhe der Erhebungen (Rauhtiefe) im Bereich von 20 $\mu$m bis 200 $\mu$m liegt.

14. Bodenbelag aus einer mehrschichtigen Kunststoffbahn oder -platte nach einem oder mehreren der Ansprüche 1 bis 13, wobei die transparente Deckschicht und die gegebenenfalls zwischen der Deckschicht und der Unterschicht angeordnete weitere Schicht einen niedrigeren Erweichungspunkt hat bzw. haben als die Unterschicht.

15. Bodenbelag aus einer mehrschichtigen Kunststoffbahn oder- platte nach einem oder mehreren der Ansprüche 1 bis 14, wobei auf der Oberfläche der transparenten Deckschicht ein Finish oder ein Lack aufgebracht ist.

16. Bodenbelag aus einer mehrschichtigen Kunststoffbahn oder- platte nach einem oder mehreren der Ansprüche 1 bis 15, wobei auf der der Klarschicht abgewandten Oberfläche der Unterschicht eine Haftschicht angeordnet ist.

17. Verfahren zur Herstellung eines Bodenbelags aus einer mehrschichtigen Kunststoffbahn oder -platte mit dreidimensionaler Optik, umfassend die folgenden Schritte:

   - Bereitstellen einer Schicht aus thermoplastischem Kunststoffmaterial und Prägen einer Oberfläche der Schicht, um eine einseitig oberflächengeprägte Unterschicht zu erhalten,
   - Bereitstellen einer transparenten Deckschicht aus einem thermoplastischen Kunststoffmaterial,
   - Anordnen der transparenten Deckschicht auf der geprägten Oberfläche der Unterschicht, und
   - kraftschlüssiges Verbinden der Schichten dergestalt, dass sich die Prägung der Unterschicht auf die mit der Unterschicht in Kontakt stehenden Oberfläche der transparenten Deckschicht überträgt, wodurch die mehrschichtige Kunststoffbahn oder -platte mit dreidimensionaler Optik erhalten wird.

18. Verfahren nach Anspruch 17, wobei die transparente Deckschicht vor dem Verbinden mit der Unterschicht auf der der Unterschicht zugewandten Oberfläche bedruckt wird.

19. Verfahren nach Anspruch 17 oder 18, wobei die geprägte Oberfläche der Unterschicht vor dem Verbinden mit der transparenten Deckschicht bedruckt wird.

20. Verfahren nach einem oder mehreren der Ansprüche 17 bis 19, wobei vor dem Verbinden der Schichten zwischen die transparente Deckschicht und die geprägte Unterschicht eine weitere Schicht eingebracht wird.

21. Verfahren nach Anspruch 20, wobei die weitere Schicht vor dem Einbringen zwischen die transparente Deckschicht und die geprägte Unterschicht auf ihrer, der transparenten Deckschicht zugewandten Oberfläche bedruckt wird.

22. Verfahren nach einem oder mehreren der Ansprüche 17 bis 21, wobei die Unterschicht eine Folie ist.

23. Verfahren nach Anspruch 22, wobei die Unterschicht ein Laminat aus mindestens zwei Folien ist.

24. Verfahren nach einem oder mehreren der Ansprüche 17 bis 23, wobei die transparente Deckschicht eine Folie ist.

25. Verfahren nach Anspruch 24, wobei die transparente Deckschicht ein Laminat aus mindestens zwei Folien ist.

26. Verfahren nach einem oder mehreren der Ansprüche 17 bis 25, wobei die transparente Deckschicht entweder vor oder nach dem Verbinden mit der geprägten Unterschicht und gegebenenfalls der weiteren Schicht auf ihrer, der Unterschicht abgewandten Oberfläche geprägt wird.

27. Verfahren nach einem oder mehreren der Ansprüche 17 bis 26, wobei das kraftschlüssige Verbinden der Schichten unter Anwendung von Temperatur und Druck erfolgt.

28. Verfahren nach einem oder mehreren der Ansprüche 17 bis 27, wobei die transparente Deckschicht und gegebenenfalls die weitere Schicht jeweils einen niedrigeren Erweichungspunkt hat bzw. haben, als die geprägte Unterschicht.

29. Verfahren nach einem oder mehreren der Ansprüche 17 bis 28, wobei das kraftschlüssige Verbinden der Schichten durch Hindurchführen der Schichten zwischen Walzen erfolgt.

30. Verfahren nach Anspruch 29, wobei die mit der Deckschicht in Kontakt stehende Walze geheizt wird und/oder die mit der Unterschicht in Kontakt stehende Walze nicht geheizt oder gekühlt wird.

31. Verfahren nach einem oder mehreren der Ansprüche 17 bis 30, wobei die transparente Deckschicht und gegebenenfalls die weitere Schicht vor dem kraftschlüssigen Verbinden mit der geprägten Unterschicht vorgewärmt wird bzw. werden.

32. Verfahren nach einem oder mehreren der Ansprüche 17 bis 31, wobei die Profilspitzen der geprägten Unterschicht vor dem Verbinden mit der bedruckten weiteren Schicht und der transparenten Deckschicht mit einem Lösungsmittel benetzt werden.

33. Verfahren nach einem oder mehreren der Ansprüche 17 bis 31, wobei die Bedruckung der Profilspitzen der geprägten und bedruckten Unterschicht vor dem Verbinden mit der transparenten Deckschicht entfernt wird.

## Claims

1. Floor covering composed of a multi-layered plastics web or of a multi-layered plastics sheet with three-dimensional appearance, encompassing a single-side-surface-embossed underlayer and a transparent outer layer which has been arranged on the embossed surface of the underlayer and which has a non-interlocking mechanical bond thereto and whose underside has the embossment structure transferred from the underlayer.

2. Floor covering composed of a multi-layered plastics web or of a multi-layered plastics sheet according to Claim 1, where the transparent outer layer has been printed on the surface facing towards the underlayer.

3. Floor covering composed of a multi-layered plastics web or of a multi-layered plastics sheet according to Claim 1 or 2, where the embossed surface of the underlayer has been printed.

4. Floor covering composed of a multi-layered plastics web or of a multi-layered plastics sheet according to Claim 1 or 2, where a further layer has been arranged between the transparent outer layer and the embossed underlayer.

5. Floor covering composed of a multi-layered plastics web or of a multi-layered plastics sheet according to Claim 4, where the further layer has been printed on its surface facing towards the outer layer.

6. Floor covering composed of a multi-layered plastics web or of a multi-layered plastics sheet according to one or more of Claims 1 to 5, where the underlayer is a foil.

7. Floor covering composed of a multi-layered plastics web or of a multi-layered plastics sheet according to Claim 5, where the underlayer is a laminate composed of at least two foils.

8. Floor covering composed of a multi-layered plastics web or of a multi-layered plastics sheet according to one or more of Claims 1 to 7, where the transparent outer layer is a foil.

9. Floor covering composed of a multi-layered plastics web or of a multi-layered plastics sheet according to Claim 8, where the transparent outer layer is a laminate composed of at least two foils.

10. Floor covering composed of a multi-layered plastics web or of a multi-layered plastics sheet according to one or more of Claims 1 to 9, where the transparent outer layer has an embossment on its surface facing away from the embossed underlayer.

11. Floor covering composed of a multi-layered plastics web or of a multi-layered plastics sheet according to Claim 10, where the embossment has a predetermined structure.

12. Floor covering composed of a multi-layered plastics web or of a multi-layered plastics sheet according to Claim 10 or 11, where the predetermined structure is a profile with elevations and depressions, where the average distance between profile peaks in the centre line (Sm) is more than 200 $\mu$m and less than 1000 $\mu$m.

13. Floor covering composed of a multi-layered plastics web or of a multi-layered plastics sheet according to one or more of Claims 10 to 12, where the height of the elevations (roughness depth) is in the range from 20 $\mu$m to 200 $\mu$m.

14. Floor covering composed of a multi-layered plastics web or of a multi-layered plastics sheet according to one or more of Claims 1 to 13, where the transparent outer layer and the further layer arranged, if appropriate, between the outer layer and the underlayer has/have a lower softening point than the underlayer.

15. Floor covering composed of a multi-layered plastics web or of a multi-layered plastics sheet according to one or more of Claims 1 to 14, where a finish or a lacquer has been applied on the surface of the transparent outer layer.

16. Floor covering composed of a multi-layered plastics web or of a multi-layered plastics sheet according to one or more of Claims 1 to 15, where an adhesion layer has been arranged on that surface of the underlayer that faces away from the clear layer.

17. Process for the production of a floor covering composed of a multi-layered plastics web or of a multi-layered plastics sheet with three-dimensional appearance, encompassing the following steps:

- provision of a layer composed of thermoplastic material and embossing of a surface of the layer, in order to obtain a single-side-surface-embossed underlayer,
- provision of a transparent outer layer composed of a thermoplastic material,
- arrangement of the transparent outer layer on the embossed surface of the underlayer, and
- non-interlocking mechanical bonding of the layers, so that the embossment of the underlayer becomes transferred to that surface of the transparent outer layer that is in contact with the underlayer, thus giving the multi-layered plastics web or the multi-layered plastics sheet with three-dimensional appearance.

18. Process according to Claim 17, where, prior to the bonding to the underlayer, the transparent outer layer is printed on that surface facing towards the underlayer.

19. Process according to Claim 17 or 18, where, prior to the bonding to the transparent outer layer, the embossed surface of the underlayer is printed.

20. Process according to one or more of Claims 17 to 19, where, prior to the bonding of the layers, a further layer is introduced between the transparent outer layer and the embossed underlayer.

21. Process according to Claim 20, where, prior to the introduction between the transparent outer layer and the embossed underlayer, the further layer is printed on its surface facing towards the transparent outer layer.

22. Process according to one or more of Claims 17 to 21, where the underlayer is a foil.

23. Process according to Claim 22, where the underlayer is a laminate composed of at least two foils.

24. Process according to one or more of Claims 17 to 23, where the transparent outer layer is a foil.

25. Process according to Claim 24, where the transparent outer layer is a laminate composed of at least two foils.

26. Process according to one or more of Claims 17 to 25, where, either prior to or after the bonding to the embossed underlayer and, if appropriate, to the further layer, the transparent outer layer is embossed on its surface facing away from the underlayer.

**27.** Process according to one or more of Claims 17 to 26, where the non-interlocking mechanical bonding of the layers takes place with application of heat and pressure.

**28.** Process according to one or more of Claims 17 to 27, where the transparent outer layer and, if appropriate, the further layer respectively has/have a lower softening point than the embossed underlayer.

**29.** Process according to one or more of Claims 17 to 28, where the non-interlocking mechanical bonding of the layers takes place via passage of the layers between rolls.

**30.** Process according to Claim 29, where the roll in contact with the outer layer is heated and/or the roll in contact with the underlayer is not heated or is cooled.

**31.** Process according to one or more of Claims 17 to 30, where the transparent outer layer and, if appropriate, the further layer is/are preheated prior to the non-interlocking mechanical bonding to the embossed underlayer.

**32.** Process according to one or more of Claims 17 to 31, where, prior to the bonding to the printed further layer and to the transparent outer layer, the profile peaks of the embossed underlayer are wetted with a solvent.

**33.** Process according to one or more of Claims 17 to 31, where, prior to the bonding to the transparent outer layer, the print effect on the profile peaks of the embossed and printed underlayer is removed.

**Revendications**

**1.** Revêtement de sol constitué d'une bande ou d'une plaque de matière plastique multicouche présentant un aspect en trois dimensions, comprenant une sous-couche gaufrée en surface d'un côté et une couche de recouvrement transparente disposée sur la surface gaufrée de la sous-couche et assemblée à celle-ci par complémentarité de force, qui présente dans sa face inférieure la structure de gaufrage transmise par la sous-couche.

**2.** Revêtement de sol constitué d'une bande ou d'une plaque de matière plastique multicouche selon la revendication 1, la couche de recouvrement transparente étant imprimée sur la surface tournée vers la sous-couche.

**3.** Revêtement de sol constitué d'une bande ou d'une plaque de matière plastique multicouche selon la revendication 1 ou 2, la surface gaufrée de la sous-couche étant imprimée.

**4.** Revêtement de sol constitué d'une bande ou d'une plaque de matière plastique multicouche selon la revendication 1 ou 2, une couche supplémentaire étant disposée entre la couche de recouvrement transparente et la sous-couche gaufrée.

**5.** Revêtement de sol constitué d'une bande ou d'une plaque de matière plastique multicouche selon la revendication 4, la couche supplémentaire étant imprimée sur sa surface tournée vers la couche de recouvrement.

**6.** Revêtement de sol constitué d'une bande ou d'une plaque de matière plastique multicouche selon l'une quelconque ou plusieurs des revendications 1 à 5, la sous-couche étant une feuille.

**7.** Revêtement de sol constitué d'une bande ou d'une plaque de matière plastique multicouche selon la revendication 5, la sous-couche étant un stratifié comprenant au moins deux feuilles.

**8.** Revêtement de sol constitué d'une bande ou d'une plaque de matière plastique multicouche selon l'une quelconque ou plusieurs des revendications 1 à 7, la couche de recouvrement transparente étant une feuille.

**9.** Revêtement de sol constitué d'une bande ou d'une plaque de matière plastique multicouche selon la revendication 8, la couche de recouvrement transparente étant un stratifié comprenant au moins deux feuilles.

**10.** Revêtement de sol constitué d'une bande ou d'une plaque de matière plastique multicouche selon l'une quelconque ou plusieurs des revendications 1 à 9, la couche de recouvrement transparente présentant un gaufrage sur sa surface opposée à la sous-couche gaufrée.

**11.** Revêtement de sol constitué d'une bande ou d'une plaque de matière plastique multicouche selon la revendication 10, le gaufrage présentant une structure prédéterminée.

**12.** Revêtement de sol constitué d'une bande ou d'une plaque de matière plastique multicouche selon la revendication 10 ou 11, la structure prédéterminée étant un profil présentant des élévations et des évidements, l'écart moyen entre les extrémités du profil dans la ligne médiane (Sm) s'élevant à plus de 200 $\mu$m et moins de 1000 $\mu$m.

**13.** Revêtement de sol constitué d'une bande ou d'une plaque de matière plastique multicouche selon l'une quelconque ou plusieurs des revendications 10 à 12, la hauteur des élévations (profondeur de rugosité) se trouvant dans la plage de 20 $\mu$m à 200 $\mu$m.

**14.** Revêtement de sol constitué d'une bande ou d'une plaque de matière plastique multicouche selon l'une quelconque ou plusieurs des revendications 1 à 13, la couche de recouvrement transparente et, le cas échéant, la couche supplémentaire disposée entre la couche de recouvrement et la sous-couche, présentant un point d'amollissement plus faible que la sous-couche.

**15.** Revêtement de sol constitué d'une bande ou d'une plaque de matière plastique multicouche selon l'une quelconque ou plusieurs des revendications 1 à 14, une finition ou un vernis étant appliqué sur la surface de la couche de recouvrement transparente.

**16.** Revêtement de sol constitué d'une bande ou d'une plaque de matière plastique multicouche selon l'une quelconque ou plusieurs des revendications 1 à 15, une couche adhésive étant disposée sur la surface opposée à la couche claire.

**17.** Procédé de fabrication d'un revêtement de sol constitué d'une bande ou d'une plaque de matière plastique multicouche présentant un aspect en trois dimensions, comprenant les étapes suivantes :

- préparation d'une couche de matière thermoplastique et gaufrage d'une surface de la couche, afin d'obtenir une sous-couche gaufrée en surface d'un côté,
- préparation d'une couche de recouvrement transparente constituée de matière thermoplastique,
- disposition de la couche de recouvrement transparente sur la surface gaufrée de la sous-couche, et
- assemblage par complémentarité de force des couches, de telle sorte que le gaufrage de la sous-couche soit transmis sur la surface en contact avec la sous-couche de la couche de recouvrement transparente, permettant d'obtenir la bande ou plaque de matière plastique multicouche présentant un aspect en trois dimensions.

**18.** Procédé selon la revendication 17, la couche de recouvrement transparente étant imprimée sur la surface opposée à la sous-couche avant l'assemblage à la sous-couche.

**19.** Procédé selon la revendication 17 ou 18, la surface gaufrée de la sous-couche étant imprimée avant l'assemblage à la couche de recouvrement transparente.

**20.** Procédé selon l'une quelconque ou plusieurs des revendications 17 à 19, une couche supplémentaire étant appliquée entre la couche de recouvrement et la sous-couche gaufrée avant l'assemblage des couches.

**21.** Procédé selon la revendication 20, la couche supplémentaire étant imprimée, avant l'application entre la couche de recouvrement transparente et la sous-couche gaufrée, sur sa surface opposée à la couche de recouvrement transparente.

**22.** Procédé selon l'une quelconque ou plusieurs des revendications 17 à 21, la sous-couche étant une feuille.

**23.** Procédé selon la revendication 22, la sous-couche étant un stratifié comprenant au moins deux couches.

**24.** Procédé selon l'une quelconque des revendications 17 à 23, la couche de recouvrement transparente étant une feuille.

**25.** Procédé selon la revendication 24, la couche de recouvrement transparente étant un stratifié comprenant au moins deux feuilles.

**26.** Procédé selon l'une quelconque ou plusieurs des revendications 17 à 25, la couche de recouvrement transparente étant gaufrée, soit avant soit après l'assemblage à la sous-couche gaufrée et le cas échéant à la couche supplémentaire, sur sa surface opposée à la sous-couche.

27. Procédé selon l'une quelconque ou plusieurs des revendications 17 à 26, l'assemblage par complémentarité de force des couches ayant lieu au moyen de l'application d'une certaine température et pression.

28. Procédé selon l'une quelconque ou plusieurs des revendications 17 à 27, la couche de recouvrement transparente et le cas échéant la couche supplémentaire présentant respectivement un point d'amollissement plus faible que la sous-couche gaufrée.

29. Procédé selon l'une quelconque ou plusieurs des revendications 17 à 28, l'assemblage par complémentarité de force des couches étant réalisé par le passage des couches entre des cylindres.

30. Procédé selon la revendication 29, le cylindre en contact avec la couche de recouvrement étant chauffé et/ou le cylindre en contact avec la sous-couche n'étant pas chauffé ou étant refroidi.

31. Procédé selon l'une quelconque ou plusieurs des revendications 17 à 30, la couche de recouvrement transparente et le cas échéant la couche supplémentaire étant préchauffée(s) avant l'assemblage par complémentarité de force à la sous-couche gaufrée.

32. Procédé selon l'une quelconque ou plusieurs des revendications 17 à 31, les extrémités du profil de la sous-couche gaufrée étant mouillées au moyen d'un solvant avant l'assemblage à la couche supplémentaire imprimée et la couche de recouvrement transparente.

33. Procédé selon l'une quelconque ou plusieurs des revendications 17 à 31, l'impression des extrémités du profil de la sous-couche gaufrée et imprimée étant retirée avant l'assemblage à la couche de recouvrement transparente.